# EUROPEAN PATENT SPECIFICATION

(11) **EP 2 642 868 B1**
(45) Date of publication and mention of the grant of the patent: **15.10.2014**
(21) Application number: 11784714.5
(22) Date of filing: 22.11.2011
(51) Int. Cl.: A23F 3/16, A23F 3/06

(54) **PACKAGED LIQUID TEA PRODUCT**
VERPACKTES FLÜSSIGES TEEPRODUKT
PRODUIT À BASE DE THÉ LIQUIDE CONDITIONNÉ

(30) Priority: 26.11.2010 EP 10192688
(43) Date of publication of application: 02.10.2013
(73) Proprietor: Unilever PLC, London EC4Y 0DN (GB); Unilever N.V., 3013 AL Rotterdam (NL)
(72) Inventor: SHARP, David, George, Sharnbrook Bedfordshire MK44 1LQ (GB); WOOLLEY, Helen, Jane, Sharnbrook Bedfordshire MK44 1LQ (GB); YOU, Xiaoqing, Sharnbrook Bedfordshire MK44 1LQ (GB)
(74) Representative: Askew, Sarah Elizabeth
(86) International application number: PCT/EP2011/070640
(87) International publication number: WO 2012/069452

(56) References cited:
- WO-A1-2010/037769
- WO-A2-2009/059927
- DATABASE WPI Week 200647 Thomson Scientific, London, GB; AN 2006-454783 XP002637989, & CN 1 718 030 A (LANCANGJIANG BEER ENTERPRISE CO LTD) 11 January 2006 (2006-01-11) cited in the application

## Description

### TECHNICAL FIELD OF THE INVENTION

The present invention relates to packaged liquid products for diluting to prepare beverages. In particular the present invention relates to such products which comprise expressed tea juice.

### BACKGROUND TO THE INVENTION

Beverages based on the tea plant (*Camellia sinensis*) have been popular throughout the world for hundreds of years. Traditionally such beverages are produced by infusing tea leaves in hot water and separating the aqueous plant extract from the remaining insoluble plant material.

Today such beverages can be prepared by more convenient methods which dispense with the need for manipulation of insoluble plant material by the end-user or consumer. In particular, the beverages can be prepared from instant powders, granules or liquid concentrates which can be conveniently dissolved and/or diluted in water.

Juice expressed from tea leaves (rather than extracted from leaves with a solvent) is found to produce beverages having organoleptic properties different from those of produced from conventional liquid tea concentrates.

International patent application published as WO 2009/059927 (Unilever) discloses a process for manufacturing one such tea juice wherein the process comprises the steps of: providing fresh tea leaves comprising catechins; macerating the fresh tea leaves thereby to produce dhool; fermenting the dhool for a fermentation time sufficient to reduce the content of catechins in the dhool to less than 50% of the content of catechins in the fresh tea leaves prior to maceration on a dry weight basis; and then expressing juice from the fermented dhool thereby to produce leaf residue and tea juice, wherein the amount of expressed juice is at least 50 ml per kg of the fresh tea leaves.

Thus there is a need to package tea juice in unit-doses, wherein each unit dose is suitable for dilution to make a palatable tea beverage.

Surprisingly we have found that owing to the unique organoleptic properties of tea juice, consumers prefer beverages prepared with a specific amount of tea juice solids and so we have recognised that it is necessary to provide packaged liquid products comprising tea juice and having the specific amount of tea solids. Furthermore we have found that it is necessary to control the amount of catechins in the liquid product within certain limits to allow for the preparation of beverages which are acceptable to consumers.

### TESTS AND DEFINITIONS

### Tea

'Tea" for the purposes of the present invention means material from *Camellia sinensis.*

"Green tea" refers to substantially unfermented tea. "Black tea" refers to substantially fermented tea. "Oolong tea" refers to partially fermented tea.

"Fermentation" refers to the oxidative and hydrolytic process that tea undergoes when certain endogenous enzymes and substrates are brought together by mechanical disruption of the cells by maceration of the leaves. During this process colourless catechins in the leaves are converted to a complex mixture of yellow and orange to dark-brown polyphenolic substances.

"Fresh tea leaves" refers to tea leaves and/or stem that have never been dried to a water content of less than 30% by weight, and usually have a water content in the range 60 to 90%.

"Tea juice" refers to juice squeezed out from fresh tea leaves using physical force, as opposed to extracts produced by extraction of tea solids with the use of a solvent.

### Miscellaneous

Except in the examples, or where otherwise explicitly indicated, all numbers in this description indicating amounts of material or conditions of reaction, physical properties of materials and/or use may optionally be understood as modified by the word "about".

All amounts are by weight of the final product, unless otherwise specified.

It should be noted that in specifying any range of values, any particular upper value can be associated with any particular lower value.

For the avoidance of doubt, the word "comprising" is intended to mean "including" but not necessarily "consisting of" or "composed of". In other words, the listed steps or options need not be exhaustive.

The disclosure of the invention as found herein is to be considered to cover all embodiments as found in the claims as being multiply dependent upon each other irrespective of the fact that claims may be found without multiple dependency or redundancy.

### SUMMARY OF THE INVENTION

In a first aspect the present invention provides a packaged liquid product for diluting to prepare a beverage, wherein the liquid product comprises expressed tea juice, wherein the total amount of tea solids in the liquid product is greater than 0.42 g; wherein the tea solids comprise less than 10% catechins by weight of the tea solids, wherein the packaged liquid product has a total volume of from 6.0 ml to 15 ml.

Such a product is found to be dilutable to produce beverages which have improved consumer acceptance compared with products which have less tea solids and/or comprise higher amounts of catechins in the tea solids.

In a further aspect the present invention provides a method for preparing a beverage comprising providing the packaged liquid product according to the first aspect, opening the package and contacting the liquid product with a diluent liquid.

In a still further aspect the present invention provides a process for manufacturing the packaged liquid product of the first apsect, comprising the steps of:
(i) expressing tea juice from fresh tea leaves;
(ii) forming an open package;
(iii) dosing a portion of the tea juice into the package; and
(iv) sealing the package.

### DETAILED DESCRIPTION

The present invention is based, in part, on the finding that unit doses of liquid products based on tea juice and intended for dilution to make a beverage, for example by diluting the liquid product in a cup of water, need to deliver a certain amount of tea solids to provide consumer-acceptable beverages. In this respect we have determined that the total amount of tea solids in the liquid product should be greater than 0.42 g, preferably at least 0.45 g, more preferably at least 0.47 g and most preferably at least 0.50 g.

It is preferred that the amount of tea solids is not too high otherwise the taste of the final beverage and/or the portionability of the product may be adversely affected. Thus it is preferred that the total amount of tea solids in the liquid product is less than 1.5 g, more preferably less than 1.0 g, more preferably still less than 0.80 g and most preferably less than 0.70 g.

Tea juice naturally contains a relatively high concentration of tea solids and so the amount of liquid composition needed for a unit dose of beverage precursor is conveniently small. In particular, the packaged liquid product has a total volume of less than 15 ml, preferably less than 12 ml and most preferably less than 10 ml. To allow for portionability and to provide the necessary amount of tea solids without requiring concentration of tea juice the total volume of the liquid product is at least 6.0 ml, preferably at least 6.5 ml, more preferably at least 7.0 ml and most preferably at least 7.5 ml.

The liquid product comprises expressed tea juice. Owing to the unique organoleptic properties of tea juice it is preferred that at least 50% by weight of the tea solids are provided by the tea juice, more preferably at least 75% and most preferably from 90 to 100%.

In addition to the amount of tea solids in the liquid product, we have also found that consumer preference depends on the type of tea solids in the liquid product. In particular we have found that the presence of significant amounts of substantially unfermented tea solids is undesirable. Unfermented tea material contains a large proportion of catechins. Thus the tea solids in the liquid product of the present invention are selected to comprise less than 10% catechins by weight of the tea solids, preferably less than 7%, more preferably less than 5%. Most preferably the tea solids comprise catechins in an amount of from 0.00001 to 2% by weight of the tea solids.

The preferred tea solids are fermented tea solids, i.e. black tea solids. Thus it is preferred that the packaged liquid product comprises theaflavins. In addition, because the liquid tea product comprises tea juice and tea juice is typically found to have low levels of gallated polyphenols (such as gallated theaflavins) it is preferred that the weight ratio (TF1/TF4) of theaflavin (TF1) to theaflavin digallate (TF4) in the theaflavins is at least 2.0, more preferably at least 3.0, more preferably still at least 3.2 and most preferably from 3.5 to 5.0. Additionally or alternatively the amount of TF1 in the total theaflavins in the liquid product is preferably at least 40% by weight, more preferably at least 42% by weight and most preferably from 45 to 60%. Suitable methods for determining theaflavin contents can be found, for example in the International patent application published as WO 2009/059927 (Unilever).

The liquid product is packaged, by which is meant that the liquid product is contained within a sealed package. In particular the package is sealed to ensure that the package is impermeable to microbiological contaminants by which is meant that the packaged product can be stored for at least 6 months at a temperature of 20°C without the amount of spore-forming bacteria (*Bacillus* and *Clostridia spp*) in the liquid product increasing above 100 cfu / ml.

Suitable packages include sachets, capsules, cartons or bottles.

From the point of view of cost and convenience of storage and/or packaging, it is preferred that the package is a sachet. Sachets are typically formed from flexible packaging material. The most preferred packaging material being plastic-foil laminate material, especially material comprising a metal (such as aluminium) foil layer sandwiched between two or more plastic (such as polyethylene terephthalate, polyethylene, polypropylene or combinations thereof) layers.

The liquid product is preferably used to prepare a beverage, for example by opening the package and contacting the liquid product with a diluent liquid, preferably water. Since the liquid composition is relatively rich in tea solids, it can usually be diluted many-fold whilst still imparting tea flavour to the resulting beverage. Thus the liquid product is preferably diluted by a factor of 5 to 50 by weight, more preferable by a factor of 10 to 40 and most preferably by a factor of 15 to 35. Additionally or alternatively the entire liquid product is preferably diluted in an amount of the diluent liquid of from 100 to 300 ml, more preferably 150 to 275 ml and most preferably from 175 to 250 ml.

The packaged liquid tea product of the present invention may be manufactured by any convenient process. However a preferred process comprises the steps of:
(i) expressing tea juice from fresh tea leaves;
(ii) forming an open package;
(iii) dosing a portion of the tea juice into the package; and
(iv) sealing the package.

It is possible that a small amount of solvent (e.g. water) is added to the fresh tea leaves during the expression step (i). However, in order to prevent significant extraction of tea solids by the solvent, the moisture content of the fresh leaves during expression is preferably between 30 and 90% by weight, more preferably between 60 and 90%. Preferably the amount of juice expressed is at least 50 ml per kg of fresh leaves, more preferably from 100 to 800 ml per kg of fresh tea leaves and most preferably from 200 to 600 ml per kg of fresh leaves. The expression step produces leaf residue in addition to the juice and the juice is separated from the leaf residue prior to dosing.

Where the package is a sachet the open package may conveniently be formed by drawing a web of packaging material around a mandrel; sealing the web into a hollow tube by applying a longitudinal seal; and forming a transverse seal in the tube. A particularly suitable such process is a so-called "vertical form-fill-seal" process.

The tea juice may be dosed "as is", i.e. without any dilution. Alternatively the tea juice may be dosed simultaneously or sequentially with one or more auxiliary ingredients.

From the point of view of food hygiene it is preferred that the tea juice and/or the package is subjected to a sanitisation step such as pasteurisation or UHT treatment. For example the tea juice may be sanitised and the sanitised juice dosed into a previously-sanitised open package under sterile conditions. Additionally or alternatively the formed package may be subjected to a santisation step, for example by in-pack pasteurisation or retorting.

### EXAMPLES

The invention will be further illustrated by reference to the following non-limiting examples.

### Example 1

### Reparation of Packaged Products

Freshly-plucked tea leaves were macerated and the resulting dhool fermented for 0, 1 or 2 hours. After fermentation the dhool was pressed to express tea juice and the resulting juices were clarified by centrifugation. Part of the 1 hour fermented juice and all of the 2 hour fermented juice were each separately sealed in cans. The remaining part of the 1 hour fermented juice was blended in a weight ratio of 1:1 with the substantially unfermented juice and the resulting blend sealed in cans.

Each type of juice was split into three batches wherein each batch was subjected to a different santization step. One batch of each was pasteurised by heating to 75 °C for 5 minutes. Another batch of each was was pasteurised by heating to 95 °C for 5 minutes. The third batch of each was subjected to UHT treatment.

### Testing

A selection of the packaged products were used to make beverages by diluting 6 or 8 ml of juice in freshly boiled water. These beverages, along with a control beverage brewed from conventional leaf tea were tested using a central location quantitative sequential monadic "sip test" with 300 French consumers. The test required each consumer to give an overall opinion of each beverage on a 7 point scale wherein a score of 7 corresponds to "excellent".

### Results

Table 1 details the results for all beverages tested.

**TABLE 1**

| **Beverage Precursor** | **Amount of juice per beverage (ml)** | **Heat Treatment** | **Overall Opinion (mean score)** |
|---|---|---|---|
| Leaf Tea | -- | -- | 4.20 |
| Blend of unfermented and 1 hr ferment juice | 8 | 75°C for 5 min | 3.95 |
| Blend of unfermented and 1 hr ferment juice | 8 | 95°C for 5 min | 4.16 |
| Blend of unfermented and 1 hr ferment juice | 8 | UHT | 4.01 |
| Blend of unfermented and 1 hr ferment juice | 6 | 95°C for 5 min | 4.18 |
| Blend of unfermented and 1 hr ferment juice | 6 | UHT | 4.35 |
| 1 hour ferment juice | 8 | 95°C for 5 min | 4.41 |
| 2 hour ferment juice | 8 | 95°C for 5 min | 4.40 |

Only the beverages made from 8 ml juice which was free from the unfermented tea material significantly outperformed the beverages made from conventional leaf tea. The amount of tea solids in these juices was 7 wt% and so each of the most preferred beverages contained about 0.56 g of tea solids.

### Example 2

A second consumer test was performed substantially as described in Example 1. In the second consumer test all juice samples were sanitized by pasteurisation at 75°C for 5 min and a wider variation in the amount of juice used to prepare the beverages was investigated.

The results for all beverages tested are given in Table 2.

**TABLE 2**

| **Beverage Precursor** | **Amount of juice per beverage (ml)** | **Overall Opinion (mean score)** |
|---|---|---|
| Leaf Tea | -- | 4.5 |
| Blend of unfermented and 1 hr ferment juice | 5 | 4.0 |
| Blend of unfermented and 1 hr ferment juice | 6 | 4.1 |
| Blend of unfermented and 1 hr ferment juice | 7 | 3.9 |
| Blend of unfermented and 1 hr ferment juice | 8 | 4.0 |
| 2 hour ferment juice | 7 | 4.3 |
| 2 hour ferment juice | 8 | 4.4 |
| 2 hour ferment juice | 9 | 4.4 |
| 2 hour ferment juice | 10 | 4.3 |

Once again the beverages which were made from juice free from unfermented tea material performed better than those made from the blends. Three of the beverages made from 2 hour ferment juice (those made from 7, 8 or 9 ml) achieved parity with the beverage made from leaf tea.

## Claims

1. A packaged liquid product for diluting to prepare a beverage, wherein the liquid product comprises expressed tea juice, wherein the total amount of tea solids in the liquid product is greater than 0.42 g, wherein the tea solids comprise less than 10% catechins by weight of the tea solids, and wherein the packaged liquid product has a total volume of from 6.0 ml to 15 ml.

2. The packaged liquid product as claimed in claim 1 wherein the total amount of tea solids in the liquid product is at least 0.45 g.

3. The packaged liquid product as claimed in claim 1 or claim 2 wherein the total amount of tea solids in the liquid product is less than 1.5 g, preferably less than 1 g.

4. The packaged liquid product as claimed in any one of claims 1 to 3 wherein the total volume of the liquid product is at least 6.5 ml.

5. The packaged liquid product as claimed in any one of the preceding claims wherein the total volume of the liquid product is less than 10 ml.

6. The packaged liquid product as claimed in any one of the preceding claims wherein at least 50% by weight of the tea solids in the liquid product are provided by the expressed tea juice, more preferably from 75 to 100%.

7. The packaged liquid product as claimed in any one of the preceding claims wherein the tea solids comprise catechins in an amount of from 0.00001 to 5% by weight of the tea solids.

8. The packaged liquid product as claimed in any one of the preceding claims wherein the tea solids comprise theaflavins, the theaflavins comprise theaflavin (TF1) and theaflavin digallate (TF4) and the weight ratio (TF1/TF4) of theaflavin to theaflavin digallate is at least 2.0

9. The packaged liquid product as claimed in any one of the preceding claims wherein the package is a selected from a sachet, a capsule, a carton and a bottle.

10. The packaged liquid product as claimed in claim 9 wherein the package is a sachet formed from a plastic-foil laminate material.

11. A method for preparing a beverage comprising providing a packaged liquid product according to any one of the preceding claims, opening the package and contacting the liquid product with a diluent liquid.

12. The method of claim 11 wherein the liquid product is contacted with the diluent liquid in a weight ratio of from 1:4 to 1:49.

13. A process for manufacturing the packaged liquid product as claimed in any one of claims 1 to 10 comprising the steps of:
(i) expressing tea juice from fresh tea leaves;
(ii) forming an open package;
(iii) dosing a portion of the tea juice into the package; and
(iv) sealing the package.

14. The process as claimed in claim 13 wherein the tea juice and/or the packaged liquid product is subjected to a sanitisation step.

## Patentansprüche

1. Verpacktes flüssiges Produkt zum Verdünnen zur Herstellung eines Getränks, wobei das flüssige Produkt ausgepressten Teesaft umfasst, wobei die Gesamtmenge der Teefeststoffe im flüssigen Produkt mehr als 0,42 g beträgt, wobei die Teefeststoffe weniger als 10 % Catechine, bezogen auf das Gewicht der Teefeststoffe, umfassen und wobei das verpackte flüssige Produkt ein Gesamtvolumen von 6,0 ml bis 15 ml aufweist.

2. Verpacktes flüssiges Produkt nach Anspruch 1, wobei die Gesamtmenge der Teefeststoffe im flüssigen Produkt mindestens 0,45 g beträgt.

3. Verpacktes flüssiges Produkt nach Anspruch 1 oder 2, wobei die Gesamtmenge der Teefeststoffe im flüssigen Produkt weniger als 1,5 g und vorzugsweise weniger als 1 g beträgt.

4. Verpacktes flüssiges Produkt nach einem der Ansprüche 1 bis 3, wobei das Gesamtvolumen des flüssigen Produkts mindestens 6,5 ml beträgt.

5. Verpacktes flüssiges Produkt nach einem der vorstehenden Ansprüche, wobei das Gesamtvolumen des flüssigen Produkts weniger als 10 ml beträgt.

6. Verpacktes flüssiges Produkt nach einem der vorstehenden Ansprüche, wobei mindestens 50 Gew.-% der Teefeststoffe im flüssigen Produkt durch den ausgepressten Teesaft bereitgestellt werden, vorzugsweise 75 bis 100 %.

7. Verpacktes flüssiges Produkt nach einem der vorstehenden Ansprüche, wobei die Teefeststoffe Catechine in einer Menge von 0,00001 bis 5 Gew.-% der Teefeststoffe umfassen.

8. Verpacktes flüssiges Produkt nach einem der vorstehenden Ansprüche, wobei die Teefeststoffe Theaflavine umfassen, wobei die Theaflavine Theaflavin (TF1) und Theaflavin-digallat (TF4) umfassen und das Gewichtsverhältnis (TF1/TF4) von Theaflavin zu Theaflavin-digallat mindestens 2,0 beträgt.

9. Verpacktes flüssiges Produkt nach einem der vorstehenden Ansprüche, wobei die Verpackung aus einem Beutel, einer Kapsel, einem Karton und einer Flasche ausgewählt ist.

10. Verpacktes flüssiges Produkt nach Anspruch 9, wobei es sich bei der Verpackung um einen Beutel handelt, der aus einem Kunststoff-Folien-Laminatmaterial gebildet ist.

11. Verfahren zur Herstellung eines Getränks, umfassend das Bereitstellen eines verpackten flüssigen Produkts nach einem der vorstehenden Ansprüche, das Öffnen der Verpackung und das Kontaktieren des flüssigen Produkts mit einer Verdünnungsflüssigkeit.

12. Verfahren nach Anspruch 11, wobei das flüssige Produkt mit der Verdünnungsflüssigkeit in einem Gewichtsverhältnis von 1;4 bis 1:49 in Kontakt gebracht wird.

13. Verfahren zur Herstellung des verpackten flüssigen Produkts nach einem der Ansprüche 1 bis 10, umfassend die folgenden Stufen:
(i) das Auspressen von Teesaft aus frischen Teeblättern;
(ii) das Herstellen einer offenen Verpackung;
(iii) das Dosieren eines Teils des Teesafts in die Verpackung; und
(iv) das Verschließen der Verpackung.

14. Verfahren nach Anspruch 13, wobei der Teesaft und/oder das verpackte flüssige Produkt einer Sanitisierungsstufe unterzogen wird.

## Revendications

1. Produit liquide conditionné destiné à être dilué afin de préparer une boisson, où le produit liquide comprend du jus de thé exprimé, où la quantité totale de solides de thé dans le produit liquide est supérieure à 0,42 g, où les solides de thé comprennent moins de 10 % de catéchines en poids des solides de thé, et où le produit liquide conditionné possède un volume total compris entre 6,0 ml et 15 ml.

2. Produit liquide conditionné selon la revendication 1, dans lequel la quantité totale de solides de thé dans le produit liquide est d'au moins 0,45 g.

3. Produit liquide conditionné selon la revendication 1 ou la revendication 2, dans lequel la quantité totale de solides de thé dans le produit liquide est inférieure à 1,5 g, de préférence inférieure à 1 g.

4. Produit liquide conditionné selon l'une quelconque des revendications 1 à 3, dans lequel le volume total du produit liquide est d'au moins 6,5 ml.

5. Produit liquide conditionné selon l'une quelconque des revendications précédentes, dans lequel le volume total du produit liquide est inférieur à 10 ml.

6. Produit liquide conditionné selon l'une quelconque des revendications précédentes, dans lequel au moins 50 % en poids des solides de thé dans le produit liquide sont fournis par le jus de thé exprimé, de manière davantage préférée entre 75 et 100 %.

7. Produit liquide conditionné selon l'une quelconque des revendications précédentes, dans lequel les solides de thé comprennent des catéchines en une quantité comprise entre 0,00001 et 5 % en poids des solides de thé.

8. Produit liquide conditionné selon l'une quelconque des revendications précédentes, dans lequel les solides de thé comprennent des théaflavines, les théaflavines comprennent la théaflavine (TF1) et le digallate de théaflavine (TF4), et le rapport en poids (TF1/TF4) de la théaflavine sur le digallate de théaflavine est d'au moins 2,0.

9. Produit liquide conditionné selon l'une quelconque des revendications précédentes, dans lequel le conditionnement est sélectionné parmi un sachet, une capsule, une boîte et une bouteille.

10. Produit liquide conditionné selon la revendication 9, dans lequel le conditionnement est un sachet formé à partir d'un matériau stratifié en plastique-feuille d'aluminium.

11. Procédé pour préparer une boisson, comprenant la mise à disposition d'un produit liquide conditionné selon l'une quelconque des revendications précédentes, l'ouverture du conditionnement et la mise en contact du produit liquide avec un diluant liquide.

12. Procédé selon la revendication 11, dans lequel le produit liquide est mis en contact avec le diluant liquide selon un rapport en poids compris entre 1:4 et 1:49.

13. Procédé pour fabriquer le produit liquide conditionné selon l'une quelconque des revendications 1 à 10, comprenant les étapes qui consistent à :
(i) exprimer du jus de thé à partir de feuilles de thé fraîches ;
(ii) former un conditionnement ouvert ;
(iii) doser une partie du jus de thé dans le conditionnement ; et
(iv) fermer hermétiquement le conditionnement.

14. Procédé selon la revendication 13, dans lequel le jus de thé et/ou le produit liquide conditionné est soumis à une étape de décontamination.
